# EUROPEAN PATENT SPECIFICATION

(11) **EP 2 016 350 B1**
(45) Date of publication and mention of the grant of the patent: **24.06.2009**
(21) Application number: 07728968.4
(22) Date of filing: 10.05.2007
(51) Int. Cl.: F25B 31/00

(54) **A COOLING DEVICE AND THE CONTROL METHOD**
KÜHLVORRICHTUNG UND STEUERVERFAHREN
DISPOSITIF DE REFROIDISSEMENT ET PROCÉDÉ DE COMMANDE

(30) Priority: 11.05.2006 TR 200602323
(43) Date of publication of application: 21.01.2009
(73) Proprietor: Arçelik Anonim Sirketi, 34950 Istanbul (TR)
(72) Inventor: KERPICCI, Husnu, 34950 Istanbul (TR)
(86) International application number: PCT/EP2007/054516
(87) International publication number: WO 2007/131931

(56) References cited:
- JP-A- 2000 002 468
- US-A- 5 067 326
- US-A1- 2003 051 494

## Description

The present invention relates to a cooling device that is controlled according to the amount of oil which mixes into the cooling cycle from the compressor.

The refrigerant fluid is circulated in the cooling cycle of the cooling devices. This fluid is activated through being compressed by means of a compressor. A certain amount of oil is present in the compressor in order to protect the movable components in the compressor against high temperature and wearing out. Some amount of the oil reaching the cylinder through the muffler during the operation of the compressor mixes with the refrigerant fluid and leaks into the cooling cycle. As the amount of leaked oil increases, the oil of the compressor decreases and respectively the performance thereof is reduced. Furthermore, the oil that mixes into the cycle collects in the condenser and evaporator decreasing the efficiency of these components.

Various methods have been recommended in state of the art to return the oil leaked into the cooling cycle back to the compressor.

In the implementations explained in the Japanese patent applications no. JP51121843 and JP63198788, after the compressor is operated at a low speed for a while, the compressor is operated at high capacity to return the lubrication oil entering and staying in the cooling cycle to the compressor.

Another state of the art document is the United States of America patent no. US6675595. In the implementation explained herein, the rotation of the compressor is switched between a large discharge capacity and a small discharge capacity sequentially to return the accumulated oil in the cooling cycle back to the compressor.

In the Chinese patent application no. CN1392383, after the compressor is operated in a certain direction for a certain period of time, the flow direction is altered by means of a four-way valve. Consequently, the oil is returned back to the compressor.

In the compressor explained by the United States of America patent no. US2005011704, when the amount of oil in the oil reservoir decreases, the compressor is shut down. Accordingly, the compressor is protected from being damaged. JP-A-2000 002 468 discloses a cooling device according to the preamble of claim 1.

The object of the present invention is to design a cooling device and control method thereof wherein the cooling performance is enhanced by controlling the flow rate of the oil that mixes into the cooling cycle from the compressor.

The cooling device and the control method thereof designed to fulfill the objective of the present invention is explicated in the attached claims.

In the cooling device of the present invention, the flow rate and/or amount of the oil mixing into the cooling cycle together with the fluid is controlled by means of an oil sensor disposed at the outlet of the compressor and the rotational speed of the compressor is controlled according to the measured value. When the amount of oil mixed into the cooling cycle goes above a critical value wherein the performance of the elements in the cooling cycle starts to fall, the rotation of the compressor is started to be decreased incrementally.

Under normal conditions, the momentary speed of the compressor is decided by a cooling algorithm that functions according to data received from a thermostat within the body. However when the oil sensor detects that there is a great amount of oil flow into the cooling cycle, this cooling algorithm is suspended and the compressor rotation is determined by an algorithm that takes into account the oil flow rate information as the data. This algorithm starts to reduce the compressor rotation step by step when the flow rate of oil leaving the compressor starts to increase in order to prevent oil flow into the evaporator and the condenser that will affect their performance adversely. As the time duration of the compressor operation is not desired to be prolonged too much, the flow rate of oil mixing in the cooling cycle is monitored continuously between these steps, and when it is detected to be below the critical value, the normal cooling algorithm is again activated.

If the flow rate of oil mixing in the cooling cycle is detected not to be below the critical value even though the compressor is reduced to the minimum rotation value determined by the producer for a temperature value measured inside the body by the thermostat, the speed is not decreased any further. When the speed is constant at this minimum value, the oil is cooled by a cooling means to increase viscosity and thus to decrease the fluency in order to decrease the flow rate of oil from the compressor mixing with the cooling cycle.

In an embodiment of the present invention, the cooling means is a fan disposed outside preferably under the compressor.

In another embodiment of the present invention, one oil sensor is disposed at both the inlet and the outlet of the compressor to measure the inflow and outflow rates of the oil. Of this information, the oil outflow rate is used and the compressor speed is controlled by means of the above mentioned algorithm that controls the oil. Together with this algorithm, another algorithm functioning simultaneously aimed at preventing damage to the compressor, calculates how much oil is left in the compressor at a certain moment by using the outflow and inflow oil rate information. When the oil left in the compressor is nearing an amount that can harm the components of the compressor, it is operated at a rotation just below the limit speed value determined by the producer. If this precaution is not sufficient for securing the critical oil level in the compressor, then the compressor is shut down.

The cooling device and control method thereof designed to fulfill the objective of the present invention is illustrated in the attached figured, where:

Figure 1 is the schematic view of a cooling cycle.

Figure 2 is the flow chart of the control method.

Figure 3 is the schematic view of another embodiment of the cooling cycle.

Figure 4 is the flow chart of the control method in another embodiment.

The elements illustrated in the figures are numbered as follows:
1. Cooling device
2. Compressor
3. Condenser
4. Evaporator
5. , 50. Oil sensor
6. Cooling means
7. Control unit

The cooling device (1) comprises a compressor (2) for compressing the refrigerant fluid, one or more evaporators (4) providing the ambient heat thereof to be transferred to the refrigerant fluid, a condenser (3) that condenses the refrigerant fluid and a control unit (7) that controls the cooling parameters. A variable speed compressor (2) is utilized in the cooling device (1).

The cooling device (1) operates according to a cooling algorithm recorded in the control unit (7). This algorithm determines the momentary speed of the compressor (2) (Crpm) according to the thermal load inside the cooling device (1).

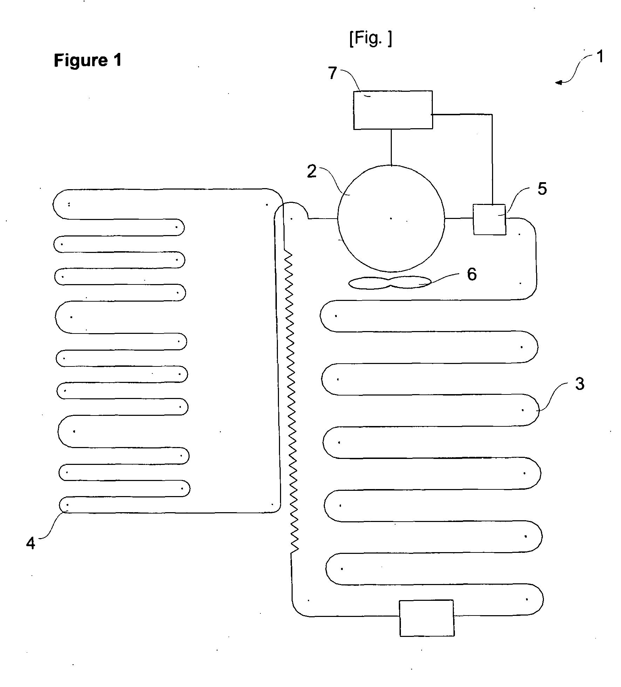

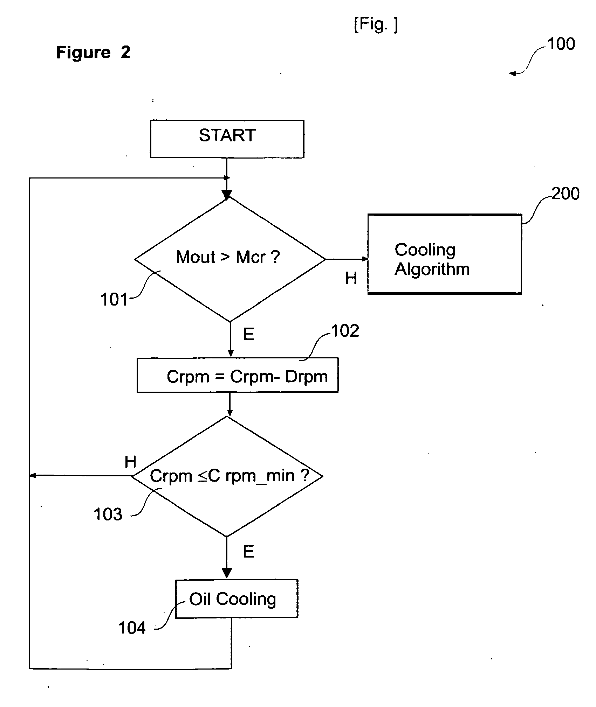

The cooling device (1) of the present invention furthermore comprises an oil sensor (5) disposed at the outlet of the compressor (2) (Figure 1). The oil sensor (5), in parallel with the normal operation of the control unit (7), measures the flow rate (Mout) of oil leaving the compressor (2) together with the refrigerant fluid and mixing in the cooling cycle at intervals determined by the producer. The oil sensor (5) can measure the outflow rate (Mout) of oil by making use of, for example the changes in light permeability and refraction amount of the fluid flowing in front thereof. When the flow rate (Mout) of oil measured by the sensor (5) exceeds a limit oil flow rate (Mcr) determined according to the momentary speed (Crpm) of the compressor (2), the control unit (7) switches off the cooling algorithm and switches on the algorithm wherein the compressor (2) speed (rotation) is controlled depending on the flow rate (Mout) of oil. In compliance with this algorithm, the control unit (7) reduces the momentary speed (Crpm) of the compressor (2) to a speed (Drpm) predetermined by the producer. Consequently, accumulation of too much oil in the evaporator (4) and the condenser (3) is tried to be forestalled (Figure 2).

The producer predetermines the limit oil flow rates (Mcr), that correspond to these speed values (Crpm) by experimental, analytical or numerical methods and records in the control unit (7). Accordingly, a different limit oil flow rate (Mcr) is used for each momentary speed (Crpm) of the compressor (2).

After the speed is decreased, the outflow rate (Mout) of oil mixing in the cooling cycle is measured again to control whether or not it has fallen below the limit value (Mcr). If the outflow rate (Mout) of oil reaches a value under the limit (Mout<Mcr), then the speed (Crpm) is not further reduced since oil outflow is sufficiently decreased, and the control unit (7) switches from oil control algorithm to normal cooling algorithm. However, if the outflow rate (Mout) of oil is not below the limit value (Mcr), the rotation reducing process should be repeated. Rotation reducing process is continued until a limit speed value (Crpm_min) determined by the producer is reached. This limit value (Crpm_min) is a value smaller than the momentary compressor (2) speed (Crpm) determined by the cooling algorithm and is variable with respect to the momentary speeds (Crpm). The cooling device (1) can still perform the cooling function at this speed (Crpm_min); however, the compressor (2) has to be operated for a longer period of time.

If the outflow rate (Mout) of oil has not fallen below the critical level even though this limit value (Crpm_min) is reached, the momentary speed is not decreased further. Thus the speed is kept constant at this limit value (Crpm_min), and oil is started to be cooled in order to reduce outflow of oil from the compressor (2). By this aim, the cooling device (1) comprises a cooling means (6). Cooling of the oil is continued until the outflow rate of oil (Mout) rises above the critical level (Mcr) (Figure 1 and Figure 2).

In this embodiment of the present invention, a fan is used as the cooling means (6), preferably situated outside of the compressor (2) that provides to cool the oil (Figure 1). Since the oil collects at the base of the compressor (2), this cooling means (6) is preferably situated under the compressor (2) and blows air towards the base thereof. Accordingly, the air from the fan reaches directly to the portion containing the oil. Consequently, oil is cooled rapidly increasing the viscosity. Since oil with high viscosity has reduced fluency, a lesser amount of oil starts to be mixed from the compressor (2) to the cooling cycle.

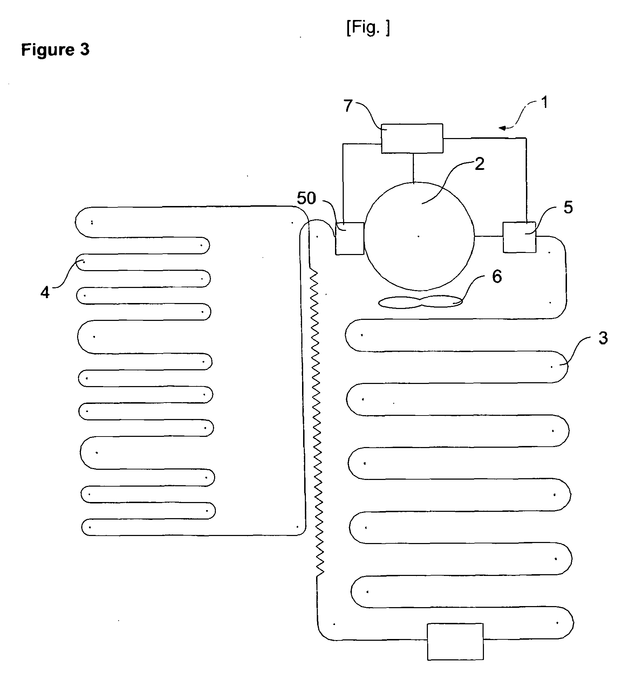

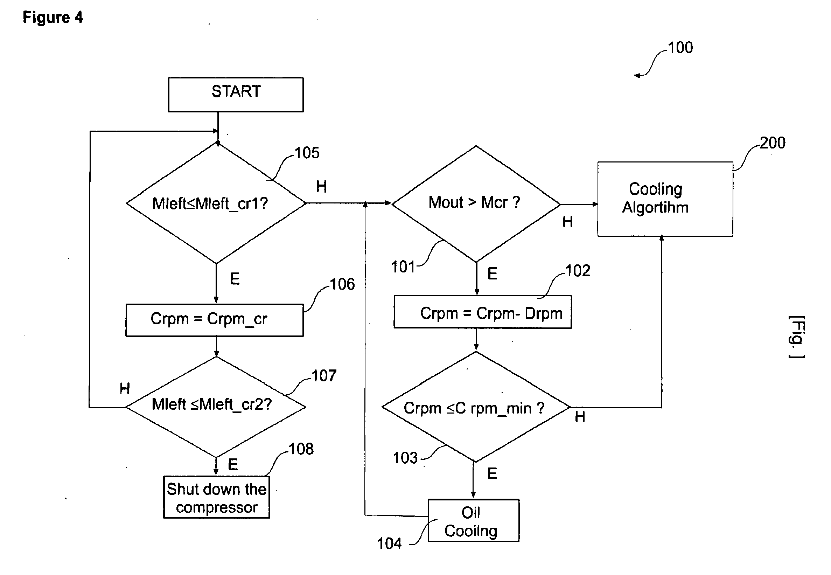

In another embodiment of the present invention, both the oil outflow (Mout) and the inflow (Min) rates are measured by means of arranging oil sensors (5, 50), one each at the inlet and outlet of the compressor (2) (Figure 3). The control unit (7) can calculate the amount of oil in the compressor (2) at a certain moment by means of an algorithm that protects the compressor (2) and also functions in parallel with the oil controlling algorithm, by making use of the information of the amount of oil in the compressor (2) at the start together with the amounts of total inflow and outflow of oil for a certain period of time calculated from the data received from the oil sensors (5, 50). When the amount of oil left (Mleft) reaches a threshold value (Mleft_cr1), above the critical level predetermined by the producer that can damage the compressor (2), the compressor (2) is started to be operated at a speed (Crpm_cr) predetermined by the producer which is just below the limit speed (Crpm_min). If nonetheless the amount of oil in the compressor (2) still goes down and reaches a second threshold (Mleft_cr2) predetermined by the producer, the compressor (2) is shut down. Consequently, the damaging of the compressor (2) is prevented (Figure 4).

The control unit (7) of the cooling device (1) of the present invention functions according to the below method (100) (Figure 2) comprising the steps of:
Controlling whether or not the oil flow rate (Mout) from the compressor (2) mixing in the cooling cycle is above a certain limit (Mcr) (101), if the oil flow rate (Mout) from the compressor (2) mixing in the cooling cycle is below the limit (Mcr), switching on the cooling algorithm (200), if above the limit value (Mcr), reducing the momentary speed (Crpm) of the compressor (2) by an amount (Drpm) predetermined by the producer (102),
comparing the speed of the compressor (2) (Crpm) with the limit speed value (Crpm_min) predetermined by the producer (103),
if the speed (Crpm) has reached the limit speed value (Crpm_min) predetermined by the producer, cooling the oil (104) and afterwards returning back to the step of controlling the oil flow rate (Mout) (101) and
if the speed (Crpm) has not reached the limit speed value (Crpm_min), returning back to the step of controlling the oil flow rate (Mout) (101).

Oil cooling process can be implemented when for example the compressor (2) is operating at a constant speed, by switching on the cooling means (6) or by shutting down the compressor (2).

In another embodiment of the present invention (Figure 4), the control method (100) comprises the below steps in addition to the above mentioned steps:
Before the step of controlling the oil flow rate (Mout) (101), calculating the amount of oil left (Mleft) in the compressor (2) and comparing it with a threshold value (Mleft_cr1) predetermined by the producer (105),
if the amount of oil left (Mleft) is not at the threshold value (Mleft_cr1), going to the step of controlling the oil flow rate (Mout) (101),
if the amount of oil left (Mleft) has reached the threshold value (Mleft_cr1) (105), then operating the compressor (2) at a speed (Crpm_cr) that is below the limit speed (Crpm_min) determined by the producer (106),
controlling whether or not the amount of oil left (Mleft) in the compressor (2) has reached a second threshold value (Mleft_cr2) predetermined by the producer (107),
if the amount of oil left (Mleft) has reached the second threshold (Mieft_cr2), then shutting down the compressor (2) (108),
if the amount of oil left (Mleft) has not reached the second threshold (Mleft_cr2), then going back to the step of comparing with the first threshold (Mleft_cr1) (105).

By means of the present invention, the mixing of an amount of oil from the compressor (2) to the cooling cycle that will adversely affect the performances of the evaporator (4) and the condenser (3) is prevented. Furthermore, the presence of a certain amount of oil in the compressor (2) is guaranteed at all times. In addition to the prior benefits, the service life of the compressor (2) is increased and the cooling cycle can be implemented more effectively.

## Claims

1. A cooling device (1) comprising a compressor (2) for compressing the refrigerant fluid, one or more evaporators (4) providing the ambient heat thereof to be transferred to the refrigerant fluid, a condenser (3) that condenses the refrigerant fluid and a control unit (7) that determines the momentary speed of the compressor (2) with respect to the thermal load and controlling the cooling parameters, an oil sensor, and **characterized by** the oil sensor (5) being disposed at the outlet of the compressor (2) that measures the flow rate (Mout) of oil that mixes together with the refrigerant fluid from the compressor (2) in the cooling cycle and a control unit (7) that reduces the momentary speed (Crpm) of the compressor (2) by an amount (Drpm) predetermined by the producer when the flow rate of oil (Mout) measured by the oil sensor (5) exceeds a limit (Mcr) determined by the producer as compared with the momentary speed (Crpm) of the compressor (2).

2. A cooling device (1) as in Claim 1, **characterized by** a control unit (7) that controls whether or not the flow rate (Mout) of oil mixing in the cooling cycle is below the limit value (Mcr) after each reduction of the speed and if a value under the limit is reached (Mout<Mcr), stopping to reduce the speed since the outflow oil is sufficiently decreased, switching on the normal cooling algorithm, and if the outflow rate (Mout) of oil is not below the limit value (Mcr), then making another reduction.

3. A cooling device (1) as in Claims 1 and 2, **characterized by** a control unit (7) that continues to reduce speed until a limit value (Crpm_min) predetermined by the producer is reached.

4. A cooling device (1) as in Claims 1, 2 and 3, **characterized by** a cooling means (6) that provides to cool the oil by keeping the speed constant at the minimum value (Crpm_min) in order to reduce the outflow of oil from the compressor (2).

5. A cooling device (1) as in Claim 4, **characterized by** a cooling means (6) which is a fan, situated under the compressor (2) and that blows air towards the base thereof.

6. A cooling device (1) as in any one of the above claims, **characterized by** a second oil sensor (50) disposed at the inlet of the compressor (2) and control unit (7) that can calculate the amount of oil left in the compressor (2) at a certain moment with the data received from both of the oil sensors (5, 50), and when the amount of oil left (Mleft) reaches a threshold value (Mleft_cr1) predetermined by the producer, that can damage the compressor (2), the compressor (2) is started to be operated at a speed (Crpm_cr) predetermined by the producer which is just below the limit speed (Crpm_min).

7. A cooling device (1) as in Claim 6, **characterized by** a control unit (7) that shuts down the compressor (2) if the amount of oil in the compressor (2) is further reduced and reaches a second threshold value (Mleft_cr2) predetermined by the producer.

8. A control method (100) of a cooling device (1) as in any one of the above claims **characterized by** the steps:
- Controlling whether or not the oil flow rate (Mout) from the compressor (2) mixing in the cooling cycle is above a certain limit (Mcr) (101),if the oil flow rate (Mout) from the compressor (2) mixing in the cooling cycle is below the limit (Mcr), switching on the cooling algorithm (200),
- if above the limit value (Mcr), reducing the momentary speed (Crpm) of the compressor (2) by an amount (Drpm) predetermined by the producer (102),
- comparing the speed of the compressor (2) (Crpm) with the limit speed value (Crpm_min) predetermined by the producer (103),
- if the speed (Crpm) has reached the limit speed value (Crpm_min) predetermined by the producer, cooling the oil (104) and afterwards returning back to the step of controlling the oil flow rate (Mout) (101) and
- if the speed (Crpm) has not reached the limit speed value (Crpm_min), returning back to the step of controlling the oil flow rate (Mout) (101).

9. A control method (100) as in Claim 8, **characterized by** the steps:
- Before the step of controlling oil flow rate (Mout) (101), calculating the amount of oil left (Mleft) in the compressor (2) and comparing it with a threshold value (Mleft_cr1) predetermined by the producer (105),
- if the amount of oil left (Mleft) is not reached the threshold value (Mleft_cr1), going to the step of controlling oil flow rate (Mout) (101),
- if the amount of oil left (Mleft) has reached the threshold value (Mleft_cr1) (105), then operating the compressor (2) at a speed (Crpm_cr) that is below the limit speed (Crpm_min) determined cooling algorithm (106),
- controlling whether or not the amount of oil left (Mleft) in the compressor (2) has reached a second threshold value (Mleft_cr2) predetermined by the producer (107),
- if the amount of oil left (Mleft) has drawn closer to the critical level (Mleft_cr) (107), then shutting down the compressor (2) (108) and,
- if the amount of oil left (Mleft) has not reached the second threshold (Mleft_cr2), then going back to the step of comparing with the first threshold (Mleft_cr1) (105).

## Patentansprüche

1. Kühlvorrichtung (1), Folgendes umfassend: einen Kompressor (2) zum Verdichten des Kühlfluids, einen oder mehrere Verdampfer (4), die dazu dienen, ihre Umgebungswärme an das Kühlfluid zu übertragen, einen Kondensator (3), der das Kühlfluid kondensiert, und eine Steuerungseinheit (7), die die Momentandrehzahl des Kompressors (2) in Bezug auf die Wärmelast bestimmt, und die Kühlparameter steuert, und einen Ölsensor (5), **dadurch gekennzeichnet, dass** der Ölsensor (5) am Auslass des Kompressors (2) angeordnet ist und die Auslaufrate (Mout) von Öl misst, das sich im Kühlzyklus mit dem Kühlfluid vom Kompressor (2) vermischt, und dass die Steuerungseinheit (7) die Momentandrehzahl (Crpm) des Kompressors (2) um eine Größe (Drpm) reduziert, die vom Hersteller im Voraus festgelegt wird, wenn die Auslaufrate des Öls (Mout), die vom Ölsensor (5) gemessen wird, im Vergleich zur Momentandrehzahl (Crpm) des Kompressors (2) einen Grenzwert (Mcr) überschreitet, der vom Hersteller festgelegt wird.

2. Kühlvorrichtung nach Anspruch 1, **dadurch gekennzeichnet, dass** die Steuerungseinheit (7) kontrolliert, ob die Auslaufrate (Mout) des Öls, das sich im Kühlzyklus vermischt, nach einer jeweiligen Reduzierung der Drehzahl unter dem Grenzwert (Mcr) liegt oder nicht, und ob ein Wert unter dem Grenzwert erreicht wird (Mout<Mcr), woraufhin sie die Reduzierung der Drehzahl unterbricht, da die Menge des auslaufenden Öls ausreichend reduziert wurde, und den normalen Kühlalgorithmus aktiviert, und die, falls die Auslaufrate (Mout) des Öls nicht unter dem Grenzwert (Mcr) liegt, eine weitere Reduzierung vornimmt.

3. Kühlvorrichtung (1) nach den Ansprüchen 1 und 2, **dadurch gekennzeichnet, dass** die Steuerungseinheit (7) fortfährt, die Drehzahl zu reduzieren, bis ein Grenzwert (Crpm_min) erreicht wird, der vom Hersteller im Voraus festgelegt wird.

4. Kühlvorrichtung (1) nach den Ansprüchen 1, 2 und 3, **gekennzeichnet durch** ein Kühlmittel (6), das dazu dient, das Öl zu kühlen, indem es die Drehzahl am Minimalwert (Crpm_min) konstant hält, um den Auslauf von Öl aus dem Kompressor (2) zu reduzieren.

5. Kühlvorrichtung (1) nach Anspruch 4, **dadurch gekennzeichnet, dass** das Kühlmittel (6) ein Gebläse ist, das unter dem Kompressor (2) angeordnet ist und Luft zu dessen Basis bläst.

6. Kühlvorrichtung (1) nach einem der vorangehenden Ansprüche, **gekennzeichnet durch** einen zweiten Ölsensor (50), der am Einlass des Kompressors (2) angeordnet ist, wobei die Steuerungseinheit (7) anhand der Daten, die sie von den beiden Ölsensoren (5, 50) empfängt, die Menge an Öl berechnen kann, die zu einem bestimmten Zeitpunkt im Kompressor (2) verblieben ist, wobei, wenn die Menge an verbliebenem Öl (Mleft) einen Schwellenwert (Mleft_cr1) erreicht, der vom Hersteller im Voraus festgelegt wird, bei dem der Kompressor (2) beschädigt werden kann, der Kompressor (2) mit einer Drehzahl (Crpm_cr) betrieben wird, die vom Hersteller im Voraus festgelegt wird und die knapp unterhalb der Grenzdrehzahl (Crpm_min) liegt.

7. Kühlvorrichtung (1) nach Anspruch 6, **dadurch gekennzeichnet, dass** die Steuerungseinheit (7) den Kompressor (2) ausschaltet, wenn die Menge an Öl im Kompressor (2) weiter reduziert wird und einen zweiten Schwellenwert (Mleft_cr2) erreicht, der vom Hersteller im Voraus festgelegt wird.

8. Steuerungsverfahren (100) für eine Kühlvorrichtung (1) nach einem der vorangehenden Ansprüche, **gekennzeichnet durch** folgende Schritte:
- Kontrollieren, ob die Auslaufrate an Öl (Mout) aus dem Kompressor (2), das sich in den Kühlzyklus mischt, über einem bestimmten Grenzwert (Mcr) liegt (101), und falls die Auslaufrate an Öl (Mout) aus dem Kompressor (2), das sich in den Kühlzyklus mischt, unter dem Schwellenwert (Mcr) liegt, Aktivieren des Kühlalgorithmus (200),
- falls sie über dem Grenzwert (Mcr) liegt, Reduzieren der Momentandrehzahl (Crpm) des Kompressors (2) um eine Größe (Drpm), die vom Hersteller im Voraus festgelegt wird (102),
- Vergleichen der Drehzahl des Kompressors (2) (Crpm) mit dem Drehzahlgrenzwert (Crpm_min), der im Voraus vom Hersteller festgelegt wird (103),
- falls die Drehzahl (Crpm) den Drehzahlgrenzwert (Crpm_min) erreicht hat, der vom Hersteller im Voraus festgelegt wird, Kühlen des Öls (104) und anschließend Zurückkehren zum Schritt des Kontrollierens der Ölauslaufrate (Mout) (101) und,
- wenn die Drehzahl (Crpm) nicht den Drehzahlgrenzwert (Crpm_min) erreicht hat, Zurückkehren zum Schritt des Kontrollierens der Ölauslaufrate (Mout) (101).

9. Steuerungsverfahren (100) nach Anspruch 8, **gekennzeichnet durch** folgende Schritte:
- Vor dem Schritt des Kontrollierens der Ölauslaufrate (Mout) (101), Berechnen der Menge an verbliebenem Öl (Mleft) im Kompressor (2) und Vergleichen derselben mit einem Schwellenwert (Mleft_cr1), der vom Hersteller im Voraus festgelegt wird (105),
- wenn die Menge an verbliebenem Öl (Mleft) den Schwellenwert (Mleft_cr1) nicht erreicht, Übergehen zum Schritt des Kontrollierens der Ölauslaufrate (Mout) (101),
- wenn die Menge an verbliebenem Öl (Mleft) den Schwellenwert (Mleft_cr1) erreicht hat (105), Betreiben des Kompressors (2) bei einer Drehzahl (Crpm_cr), die unter dem Drehzahlgrenzwert (Crpm_min) liegt, der vom Kühlalgorithmus festgelegt wird (106),
- Kontrollieren, ob die Menge an verbliebenem Öl (Mleft) im Kompressor (2) einen zweiten Schwellenwert (Mleft_cr2) erreicht hat, der vom Hersteller im Voraus festgelegt wird (107),
- wenn die Menge an verbliebenem Öl (Mleft) sich dem kritischen Pegel (Mleft_cr) annähert (107), Ausschalten des Kompressors (2) (108) und,
- wenn die Menge an verbliebenem Öl (Mleft) den zweiten Schwellenwert (Mleft_cr2) nicht erreicht hat, Zurückkehren zu dem Schritt des Vergleichens mit dem ersten Schwellenwert (Mleft_cr1) (105).

## Revendications

1. Un dispositif de refroidissement (1) comprenant un compresseur (2) pour comprimer le fluide réfrigérant, un ou plusieurs évaporateurs (4) pour fournir la chaleur ambiante de celui-ci, qui doit aussi être transférée au fluide réfrigérant, un condenseur (3) qui condense le fluide réfrigérant et une unité de contrôle (7) qui détermine la vitesse instantanée du compresseur (2) à l'égard de la charge thermique et qui contrôle les paramètres de refroidissement, un capteur d'huile (5), et **caractérisé par** le capteur d'huile (5) disposé à la sortie du compresseur (2) et qui mesure le débit (Mout) de l'huile qui se mélange avec le fluide réfrigérant du compresseur (2) dans le cycle de refroidissement et une unité de contrôle (7) qui réduit la vitesse instantanée (Crpm) du compresseur (2) selon une valeur (Drpm) prédéterminée par le producteur, lorsque le débit de l'huile (Mout), mesurée par le capteur d'huile (5) dépasse une limite (Mcr), déterminée par le producteur par rapport à la vitesse instantanée (Crpm) du compresseur (2).

2. Un dispositif de refroidissement (1) selon la Revendication 1, **caractérisé par** une unité de contrôle (7) qui contrôle si le débit (Mout) de mélange d'huile dans le cycle de refroidissement est inférieur ou non à la valeur limite (Mcr) après chaque réduction de la vitesse et si une valeur dans le cadre de la valeur limite est atteinte (Mout <Mcr), la réduction de la vitesse est arrêtée car le débit de l'huile sortant est suffisamment bas, on passe sur l'algorithme normal de refroidissement, et si le taux de sortie (Mout) de l'huile n'est pas en dessous de la valeur limite (Mcr), alors on procède à une autre réduction.

3. Un dispositif de refroidissement (1) selon les Revendications 1 et 2, **caractérisé par** une unité de contrôle (7) qui continue à réduire la vitesse jusqu'à ce que la valeur limite (Crpm_min) prédéterminée par le producteur soit atteinte.

4. Un dispositif de refroidissement (1) selon les Revendications 1, 2 et 3, **caractérisé par** des moyens de refroidissement (6) qui servent à refroidir l'huile en gardant la vitesse constante à la valeur minimale (Crpm_min) afin de réduire le débit de sortie de l'huile du compresseur (2).

5. Un dispositif de refroidissement (1) selon la Revendication 4, **caractérisé par** des moyens de refroidissement (6) qui constituent un ventilateur situé en dessous du compresseur (2) et soufflent de l'air vers la base de celui-ci.

6. Un dispositif de refroidissement (1) selon l'une quelconque des revendications précédentes, **caractérisé par** un second capteur d'huile (50) disposé à l'entrée du compresseur (2) et l'unité de contrôle (7) qui peut calculer la somme de l'huile restante dans le compresseur (2) à un certain moment avec des données reçues des deux capteurs d'huile (5, 50), et lorsque la somme de l'huile restante (Mleft) atteint la valeur de seuil (Mleft_cr1), prédéterminée par le producteur, qui pourrait endommager le compresseur (2), lequel compresseur (2) a commencé à fonctionner à une valeur (Crpm_cr) prédéterminée par le producteur qui devrait être juste en dessous de la valeur limite (Crpm_min).

7. Un dispositif de refroidissement (1) selon la Revendication 6, **caractérisé par** une unité de contrôle (7) qui ferme le compresseur (2) si la somme de l'huile dans le compresseur (2) est plus réduite et atteint la seconde valeur de seuil (Mleft_cr2) prédéterminée par le producteur.

8. Une méthode de contrôle (100) pour un dispositif de refroidissement (1) selon l'une quelconque des revendications précédentes, **caractérisée par** les étapes:
- contrôler si le débit de l'huile (Mout) venant du compresseur (2) et mélangée dans le cycle de refroidissement est au-dessus d'une certaine limite (Mcr) (101) ou non, si le débit de l'huile (Mout) venant du compresseur (2) et mélangée dans le cycle de refroidissement est inférieur à la limite (Mcr), et commuter sur l'algorithme de refroidissement (200),
- si le débit de l'huile est au-dessus de la valeur limite (Mcr), réduire la valeur instantanée (Crpm) du compresseur (2) par une somme (Drpm) prédéterminée par le producteur (102),
- comparer la valeur du compresseur (2) (Crpm) avec la valeur limite de vitesse (Crpm_min) prédéterminée par le producteur (103),
- si la vitesse (Crpm) a atteint la valeur limite de vitesse (Crpm_min) prédéterminée par le producteur, refroidir l'huile (104) et ensuite retourner à l'étape où le débit de l'huile est contrôlé (Mout) (101) et
- si la vitesse (Crpm) n'a pas atteint la valeur limite de vitesse (Crpm_min), retourner à l'étape où le débit de l'huile est contrôlé (Mout) (101).

9. Une méthode de contrôle (100) selon la Revendication 8, **caractérisée par** les étapes:
- Avant l'étape de contrôle du débit de l'huile (Mout) (101), calculer la somme de l'huile restante (Mleft) dans le compresseur (2) et la comparer avec la valeur de seuil (Mleft_cr1) prédéterminée par le producteur (105),
- si la somme de l'huile restante (Mleft) n'a pas atteint la valeur de seuil (Mleft_cr1), aller à l'étape de contrôle du débit de l'huile (Mout) (101),
- si la somme de l'huile restante (Mleft) a atteint la valeur de seuil (Mleft_cr1) (105), alors démarrer le compresseur (2) à une vitesse (Crpm_cr) qui serait en dessous de la vitesse limite (Crpm_min) déterminée conformément à l'algorithme de refroidissement (106),
- contrôler si la somme de l'huile restante (Mleft) dans le compresseur (2) a atteint la seconde valeur de seuil (Mleft_cr2) prédéterminée par le producteur (107),
- si la somme de l'huile restante (Mleft) s'est rapprochée du niveau critique (Mleft_cr) (107), alors fermer le compresseur (2) (108) et,
- si la somme de l'huile restante (Mleft) n'a pas atteint la seconde valeur de seuil (Mleft_cr2), alors retourner à l'étape de comparaison avec la valeur de seuil (Mleft_cr1) (105).
